# EUROPÄISCHE PATENTSCHRIFT

(11) **EP 2 539 204 B1**
(45) Veröffentlichungstag und Bekanntmachung des Hinweises auf die Patenterteilung: **14.01.2015**
(21) Anmeldenummer: 10788241.7
(22) Anmeldetag: 24.11.2010
(51) Int. Cl.: B62D 3/14, B62D 5/30

(54) **LENKSYSTEM MIT HYDRAULISCHER LENKSÄULE**
STEERING SYSTEM HAVING A HYDRAULIC STEERING COLUMN
SYSTEME DE DIRECTION AVEC COLONNE DE DIRECTION HYDRAULIQUE

(30) Priorität: 25.02.2010 DE 102010009362
(43) Veröffentlichungstag der Anmeldung: 02.01.2013
(73) Patentinhaber: ThyssenKrupp Presta AG, 9492 Eschen (LI)
(72) Erfinder: ROMBOLD, Manfred, 71364 Winnenden (DE)
(74) Vertreter: Lenzing Gerber Stute
(86) Internationale Anmeldenummer: PCT/EP2010/007111
(87) Internationale Veröffentlichungsnummer: WO 2011/103892

(56) Entgegenhaltungen:
- EP-A2- 2 141 060
- DE-A1- 19 838 490
- DE-A1-102008 021 973
- GB-A- 2 309 676
- DANGELMAIER R O: "NEUARTIGE VERZAHNUNG FUR ZF-ZAHNSTANGEN-LENKUNGEN", ATZ AUTOMOBILTECHNISCHE ZEITSCHRIFT, VIEWEG PUBLISHING, WIESBADEN, DE, Nr. SONDERAUSGABE, 1. Januar 1995 (1995-01-01), Seiten 16-18, XP000499648, ISSN: 0001-2785

## Beschreibung

Die vorliegende Erfindung betrifft ein Lenksystem, insbesondere eine Lenkung für ein Kraftfahrzeug, mit den Merkmalen des Oberbegriffs des Anspruchs 1.

Lenksysteme für Kraftfahrzeuge sind derzeit bis auf wenige Ausnahmen so aufgebaut, dass eine Lenksäule einen mechanischen Durchgriff von einem manuell betätigten Lenkrad zu einem Lenkgetriebe darstellt. Das Lenkgetriebe selbst ist über Spurstangen und Achsschenkel mit den lenkbaren Rädern des Kraftfahrzeugs gekoppelt. Eine Hilfskrafteinrichtung elektrischer oder hydraulischer Bauart ist häufig vorgesehen, um die Betätigungskräfte am Lenkrad zu reduzieren und den Fahrer bei dem Lenkvorgang zu unterstützen. Für die Fahrsicherheit ist es wichtig, dass auch bei einem Ausfall der Hilfskraft- oder Servounterstützung das Fahrzeug durch die mechanische Kopplung zwischen dem Lenkrad und den gelenkten Rädern lenkbar bleibt. Dies wird durch die Lenksäule, die genauer als Lenkwelle zu bezeichnen ist, gewährleistet.

Es gibt jedoch auch verschiedene Nachteile, die die Lenksäulen mit sich bringen. Nur beispielhaft sei erwähnt, dass Lenksäulen eine Geräuschübertragung zwischen dem Motorraum bzw. der Vorderachse und dem Innenraum bewirken. Lenksäulen sind bei einem Frontalaufprall auf ein Hindernis nicht unkritisch, denn es müssen besondere Vorkehrungen getroffen werden, damit diese nicht in den Innenraum eindringen. Schließlich ist für die Lenksäule ein durchgehender Kanal im Bauraum zwischen dem Lenkrad und dem Lenkgetriebe vorzusehen, was die Nutzung des Motorraums für andere Komponenten des Fahrzeugs einschränkt. Es gibt folglich verschiedene Ansätze, bei Kraftfahrzeugen auf die Lenksäule zu verzichten.

Um auch bei diesen Systemen, die dann mit elektrischer oder hydraulischer Übertragung des vom Fahrer aufgebrachten Lenkwinkels auch einen Stellantrieb arbeiten, muss jedoch die Ausfallsicherheit gegeben sein, falls das elektrische System der Lenkung versagt. Diese Ausfallsicherheit kann dadurch hergestellt werden, das eine hydraulische Zwangskopplung aus einem mit dem Lenkrad verbundenen Verdrängeraggregat und einem im Lenkgetriebe vorgesehenen Verdrängeraggregat eingesetzt wird, wobei die beiden Aggregate über Hydraulikleitungen miteinander zu koppeln sind. Auf Grund der Steifigkeit solcher hydraulischer Antriebe, die im Wesentlichen auf der geringen elastischen Nachgiebigkeit der Komponenten, der Leitungen und der Hydraulikflüssigkeit selbst beruht, ist eine Kopplung mit den erforderlichen Eigenschaften möglich. Die Hydrauliksysteme sind dabei im Allgemeinen als reine Notfallsysteme zu betrachten, die im normalen Betrieb durch ein Kurzschlussventil wirkungslos sind und die bei Stromausfall oder bei einer sonstigen Störung durch Schließen des Kurzschlussventils wirksam geschaltet werden.

Der Stand der Technik ist in den Druckschriften EP 1 213 205 B1, DE 198 01 393 C1, DE 198 38 490 A1 und DE 10 2008 021 973 A1 dargestellt. Diese Druckschriften zeigen Lenksysteme mit kurzen Lenkwellen, die über ein Ritzel mit einer Zahnstange kämmen. Die Zahnstange ist als Kolbenstange eines Kolben/Zylinderaggregats ausgebildet, welches wiederum mit einem entsprechenden Kolben/Zylinderaggregat des Lenkgetriebes in Verbindung steht. Die beiden Aggregate sind über Hydraulikleitungen gekoppelt. Es ist ersichtlich, dass die Verdrängung eines bestimmten Volumens auf der Lenkradseite zu einer entsprechenden Verlagerung der Kolbenstange im Lenkgetriebe führt. Dieser Zusammenhang ist linear.

Entsprechende Geberaggregate sind mit einer Zahnstangenverzahnung mit konstantem Übersetzungsverhältnis bekannt aus den Dokumenten EP2141060A2 und WO2009/154519A1.

Problematisch ist nun bei solchen Lenkungen, dass Servolenkungen üblicherweise mit einer variablen Übersetzung arbeiten. Dies drückt sich darin aus, dass um die Geradeausstellung herum eine Drehbewegung des Lenkrades nur zu einem geringen Lenkausschlag der gelenkten Räder führt und das Fahrzeug so in der Geradeausfahrt z. B. bei hohen Geschwindigkeiten stabil und ruhig zu fahren ist. Bei größeren Lenkausschlägen, die sich dem Endanschlag des Lenkgetriebes nähern, ist die Übersetzung so geändert, dass mit relativ geringen Lenkraddrehungen große Einschlagswinkel der gelenkten Räder erzielt werden können. Dies vereinfacht und beschleunigt das Einparken und Abbiegen. Für den Fahrer ist diese variable Übersetzung ein Komfortmerkmal, an das der Fahrer sich sehr schnell gewöhnt. Im Betrieb wird dieses Merkmal nicht als variable Übersetzung wahrgenommen, sondern dem allgemeinen Fahrverhalten des Fahrzeugs zugeordnet. Der Fahrer lernt, dass ein bestimmter, fester Zusammenhang zwischen Einschlagswinkeln des Lenkrades und bestimmten Fahrtrichtungen und der entsprechenden Richtungsänderung besteht.

Wird nun von einer so ausgelegten elektronisch gesteuerten Servolenkung auf Grund einer Störung auf ein hydraulisches Notfallsystem umgeschaltet, wie es in den oben genannten Dokumenten beschrieben ist, so ändert sich plötzlich die Übersetzung, denn die gekoppelten Kolben/Zylinderaggregate nach dem Stand der Technik arbeiten linear, also ohne die oben beschriebene Progression im Bereich der Endanschläge. In der Praxis wird das Übersetzungsverhältnis auf Grund der hydraulischen Kopplung als ein Mittelwert zwischen der indirekten Übersetzung für Geradeausfahrt und der direkten Übersetzung für große Lenkwinkel gewählt werden. Das Umschalten von der elektronisch gesteuerten Lenkung auf das hydraulische Notfallsystem führt also zu einer Übersetzungsänderung, die auf Grund der oben beschriebenen Gewöhnung des Fahrers an die Übersetzungsverhältnisse des Lenkgetriebes zu einem unsicheren Fahrverhalten führen kann.

Dieses Problem wird im Stand der Technik in der Druckschrift DE 198 38 490 A1 kurz erwähnt. Hier wird für den Notlenkbetrieb vorgeschlagen, durch gezielte Auslegung der Kolbenquerschnitte der Hydraulikkolbeneinheiten eine variable Lenkübersetzung zu ermöglichen. Es ist dabei nicht ausgeführt, wie die Kolbenquerschnitte gestaltet sein sollen, um eine solche variable Lenkübersetzung zu erzielen.

Es ist deshalb Aufgabe der vorliegende Erfindung, bei einer gattungsgemäßen Lenkung auf einfache Weise eine variable Lenkübersetzung zu schaffen. Diese Aufgabe wird von einer Lenkung mit den Merkmalen des Anspruchs 1 gelöst.

Weil bei einem Lenksystem für ein Kraftfahrzeug mit einem Lenkrad, einer Lenkwelle und einem hydraulischen Geberaggregat, wobei die Lenkwelle über eine Verzahnung mit dem Geberaggregat in mechanischer Wirkverbindung steht, sowie mit Hydraulikleitungen und einem hydraulischen Nehmeraggregat in einem Lenkgetriebe, das zur Verschwenkung lenkbarer Räder mit diesen mechanisch gekoppelt ist, das Zahnsegment eine Verzahnung mit variabler Übersetzung aufweist, kann das Übersetzungsverhältnis zwischen der Drehung des Lenkrades und dem Weg der Kolbenstange des Geberaggregats in ähnlicher Weise variabel gestaltet werden, wie dies bei einer Zahnstangenlenkung mit durchgehender Lenkwelle der Fall ist. Diese Übersetzung kann der im Betrieb üblicherweise verwendeten Übersetzung des Lenksystems sehr nahe kommend angepasst sein. Die Umschaltung auf das hydraulische Notlenksystem führt dann für den Fahrer zu einer geringeren Änderung der Übersetzungsverhältnisse der Lenkung und damit zu einer besseren Beherrschbarkeit des Kraftfahrzeugs in diesem Fahrzustand.

Wenn das hydraulische Geberaggregat ein Kolben/Zylinderaggregat mit einer axial verlagerbaren Kolbenstange ist, wobei die variable Verzahnung als Zahnsegment auf der Kolbenstange ausgebildet ist, kann eine für eine Kraftfahrzeuglenkung besonders geeignete, zuverlässig arbeitende Technik eingesetzt werden.

Wenn vorgesehen ist, dass die Kolbenstange aus einem Arbeitsraum des hydraulischen Geberaggregats heraus geführt ist und die Verzahnung (7) in dem aus dem Arbeitsraum heraus ragenden Abschnitt der Kolbenstange angeordnet ist, ergeben sich besonders kompakte Abmessungen der hydraulischen Komponenten.

Das Lenksystem spricht ohne Totzeiten oder Totgang auch nach Temperaturschwankungen an, wenn ein Expansionsbehälter vorgesehen ist, der mit wenigstens einer Hydraulikleitung und/oder einem hydraulischen Arbeitsraum kommuniziert.

Eine elektrische Servounterstützung wird erzielt, wenn eine elektronische Steuerung für die Ansteuerung eines elektrischen Stellmotors vorgesehen ist, der mit dem Lenkgetriebe in Wirkverbindung steht.

Die Merkmale der abhängigen Ansprüche beschreiben vorteilhafte Ausführungsformen der Erfindung.

Nachfolgend werden Ausführungsbeispiele der vorliegenden Erfindung anhand der Zeichnung beschrieben. Es zeigen:
- Fig. 1:: ein elektrisches Lenksystem mit hydraulischer Kopplung in einer schematischen Darstellung; sowie
- Fig. 2:: ein selbsttätiges Ventil zur Steuerung eines verbesserten Druckausgleichs in dem Lenksystem nach Fig. 1.

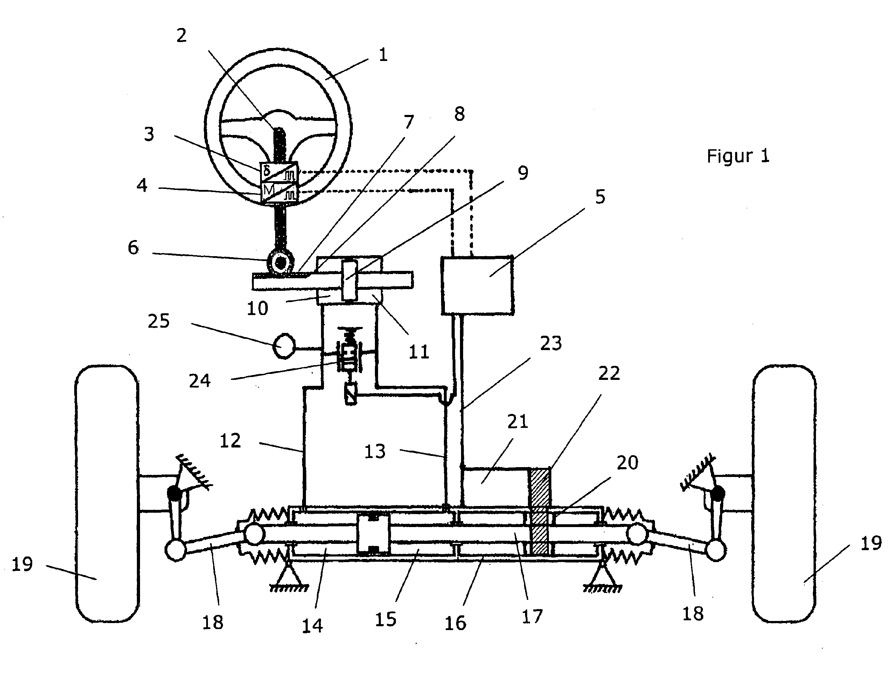

In der Fig. 1 ist schematisch ein Lenksystem für ein Kraftfahrzeug dargestellt. Das Lenksystem umfasst ein Lenkrad 1, das an einer Lenkwelle 2 drehfest angeordnet ist. Ein Drehwinkelsensor 3 und ein Drehmomentsensor 4 erfassen die in die Lenkwelle 2 eingeleiteten Drehwinkel und Drehmomente, die den Lenkwunsch des Fahrers repräsentieren, und leitet diese an eine elektronische Steuerung 5 weiter. Die Lenkwelle 2 ist kurz ausgeführt und trägt an ihrem dem Lenkrad 1 abgewandten Ende ein Ritzel 6, das mit einer Verzahnung 7 einer Kolbenstange 8 in Eingriff steht. Die Kolbenstange 8 trägt einen Hydraulikkolben 9, der zwei Arbeitsräume 10 und 11 des dadurch gebildeten Kolben/Zylinderaggregats trennt. Die Arbeitsräume 10 und 11 stehen über Hydraulikleitungen 12 und 13 mit Arbeitsräumen 14 und 15 eines Kolben/Zylinderaggregats in einem Lenkgetriebe 16 in hydraulischer Verbindung. Das Lenkgetriebe 16 umfasst die Kolbenstange 17 des Kolben/Zylinderaggregats, die in dem Lenkgetriebe 16 längs verschieblich gelagert ist. Die Kolbenstange 17 ist in bekannter Weise über Spurstangen 18 zur Verschwenkung der lenkbaren Räder 19 eingerichtet.

Das Lenkgetriebe 16 weist weiter in dieser Ausführungsform einen Kugelumlauf 20 auf, der von einem Servomotor 21 über einen Zahnriemen 22 angetrieben wird. Der Motor 21 wird von der Steuerung 5 über eine Signalleitung 23 angesteuert. Weiter ist ein 2/2-Wege-Ventil 24 zwischen den Hydraulikleitungen 12 und 13 angeordnet. Das Ventil 24 ist von der elektronischen Steuerung 5 ansteuerbar. Es handelt sich um ein im Ruhezustand geschlossenes Ventil, das bei Ansteuerung geöffnet wird. Schließlich ist noch ein Expansionsbehälter 25 mit der Hydraulikleitung 12 verbunden, um temperaturbedingte Volumenschwankungen des Hydrauliksystems kompensieren zu können.

Im Betrieb arbeitet die insoweit dargestellte Lenkung so, dass im Normalzustand die elektronische Steuerung 5 das Ventil 24 ansteuert und dadurch die beiden Hydraulikleitungen 12 und 13 verbindet. Zwischen den Arbeitsräumen 10 und 11 des Geberaggregats und den Arbeitsräumen 14 und 15 des Nehmeraggregats besteht damit keine Zwangskopplung, weil Hydraulikfluid auch im Stillstand des einen Aggregats durch das Ventil 24 fließen kann. Eine Drehung des Lenkrades 1 führt folglich nicht notwendigerweise zu einer Verlagerung der Kolbenstange 17. Die elektronische Steuerung 5 wertet die Signale der Sensoren 3 und 4 aus und steuert den Stellmotor 21 an, der über den Zahnriemen 22 den Kugelumlauf 20 dreht. Ein nicht dargestelltes Spindelgewinde auf der Kolbenstange 17 führt dann zu einer Umsetzung der Drehbewegung des Kugelumlaufs in eine Längsbewegung der Kolbenstange 17, die zu einer Verschwenkung der Räder 19 führt. Es ist bekannt, dass auf diese Weise zahlreiche Lenkfunktionen elektronisch realisiert werden können, so zum Beispiel auch automatische Lenkvorgänge, die zur Spurhaltung oder zum automatischen Einparken dienen können. Es ist aber auch über die Elektronik eine variable Lenkübersetzung simulierbar.

In der Figur 1 ist nicht dargestellt, dass die Lenkwelle 2 noch mit einem Stellmotor für ein simuliertes Handmoment des Lenkrads verbunden sein kann. Ein solcher Motor kann auch zur Unterstützung der Drehbewegung der Lenkwelle 2 vorgesehen sein, um eine eventuelle Schwergängigkeit des hydraulischen Geberaggregats zu kompensieren.

Im Störungsfall, in dem beispielsweise die Steuerung 5 stromlos wird, fällt das Ventil 24 in den geschlossenen Zustand. Es besteht damit eine eindeutige und starre Kopplung der Arbeitsräume 10 und 11 an die Arbeitsräume 14 und 15. Eine Drehung des Lenkrades 1 und der Lenkspindel 2 führt über das Ritzel 6 und den Verzahnungseingriff 7 zu einer Linearbewegung der Kolbenstange 8 und des Kolbens 9. Dadurch wird in bekannter Weise ein Arbeitsraum verkleinert und der andere Arbeitsraum vergrößert. Das aus dem verkleinerten Arbeitsraum verdrängte Hydraulikfluid strömt durch die jeweilige Hydraulikleitung 12 oder 13 in den entsprechend zugeordneten Arbeitsraum 14 oder 15, so dass eine Bewegung der Kolbenstange 17 erfolgt. Der Fahrer hat über diese Wirkungskette dann einen praktisch starren Durchgriff auf die gelenkten Räder.

Da bei bekannten Kolben/Zylinderaggregaten die Zylinderbohrung einen konstanten Durchmesser aufweist, besteht ein linearer Zusammenhang zwischen dem Hub der Kolbenstange 8 und dem Hub der Kolbenstange 17. Um die eingangs genannte variable Lenkübersetzung zu erzielen, ist erfindungsgemäß vorgesehen, dass die Verzahnung im Eingriff des Ritzels 6 in das Zahnsegment 7 eine variable Verzahnung ist, so dass beispielsweise in der in Figur 1 dargestellten Mittelstellung der Lenkwelle 2 und der Kolbenstange 8 eine indirekte Übersetzung gewährleistet ist, bei der eine Drehung des Lenkrades 1 nur eine geringe Linearbewegung der Kolbenstange 8 bewirkt, während in den Endlagen der Verzahnungen 7 die Übersetzung direkter ist, so dass dort die gleiche Relativdrehung des Lenkrades 1 zu einem Riss und Hub der Kolbenstange 8 führt. Damit wird auch im hydraulischen Notfallbetrieb gewährleistet, dass das Übersetzungsverhältnis etwa demjenigen entspricht, das durch die elektronisch betriebene Lenkung realisiert wird. Beim Übergang in den Notfallbetrieb ergibt sich für den Fahrer deshalb keine plötzliche Übersetzungsänderung. Das Fahrverhalten des Fahrzeugs bleibt in dieser Hinsicht im wesentlichen unverändert und folglich für den Fahrer berechenbar.

In einer einfacheren, nicht dargestellten Ausführungsform kann das Ventil 24 entfallen. Dadurch kann auch die Steuerung 5 vereinfacht werden, weil die Programmierung und elektronische Ansteuerung des Ventils entfallen kann.

Für die Lenkung selbst bedeutet der Wegfall des Ventils, dass eine permanente Zwangskopplung zwischen den Arbeitsräumen 10 und 14 sowie zwischen den Arbeitsräumen 11 und 15 besteht. Die Hydraulik ersetzt dabei die aus herkömmlichen elektromechanischen Servolenkungen bekannte Lenkwelle. Eine Entkopplung des Lenkrades von dem Lenkgetriebe findet nicht statt. Durch die variable Verzahnung am Geberaggregat ergibt sich dennoch eine Lenkung mit variabler Lenkübersetzung.

Die eingangs genannten Vorteile, die sich aus dem Wegfall der starren Lenkwelle ergeben, treten auch bei dieser vereinfachten Ausführungsform auf.

Beispielhaft sollen noch Zahlenwerte für die Übersetzungsverhältnisse zwischen der Drehbewegung der Lenkwelle 2 und der Linearbewegung der Kolbenstange 8 und des Kolbens 9 gegeben werden. Bevorzugt wird derzeit im Bereich der Geradeausfahrt, also etwa bei Drehwinkeln von 90° bis 180° nach Links oder Rechts von der Geradeausstellung ein Übersetzungsverhältnis von 50 mm pro 360°. Zu den Endanschlägen hin soll die Übersetzung dann steigen, bis eine Übersetzung von etwa 65 mm pro 360° erreicht wird. Die tatsächlichen Übersetzungsverhältnisse sind natürlich abhängig von dem Verhältnis der Durchmesser der gekoppelten Hydraulikräume und anderen äußeren Gegebenheiten.

Schließlich soll noch der Expansionsbehälter 25 näher erläutert werden.

Dieser Expansionsbehälter kann nicht als ein einfaches Ausgleichgefäß mit Membran und einer Gasfüllung ausgeführt werden, denn die Gasfüllung müsste einen Druck aufweisen, der oberhalb des zu erwartenden Betriebsdrucks innerhalb des Hydrauliksystems liegt. Dies würde zu einer permanenten hohen Druckbeaufschlagung der Hydraulik führen, was im Allgemeinen unerwünscht ist. Das Hydrauliksystem der Lenkung ist bei geringer Drehmomentbeaufschlagung, die zum weit überwiegenden Teil in der Praxis zu erwarten ist, im Mittel nahezu drucklos.

Das Problem wird in einer einfachen Ausführungsform dadurch gelöst, dass der Expansionsbehälter mit einer Membran und einem Gasvolumen versehen ist und über zwei Anschlüsse mit dem Hydrauliksystem verbunden ist. Ein Anschluss ist als Drosselbohrung ausgeführt, die nur eine äußerst geringe Menge an Hydraulikfluid durchlässt, wie sie bei einem Druckanstieg durch langsamen Temperaturwechsel zu erwarten ist. Ein plötzlicher Druckanstieg, der durch eine Lenkbewegung in dem Hydrauliksystem entsteht, wird durch diese Drosselbohrung nicht abgeleitet. Durch diese Drosselbohrung ist also gewährleistet, dass trotz der Ausgleichsfähigkeit gegenüber temperaturbedingten Volumenschwankungen jederzeit eine spontane Reaktion des Lenkgetriebes auf Lenkbewegungen am Geberaggregat erfolgt. Die zweite Verbindung zwischen dem Expansionsvolumen und dem Hydrauliksystem ist über ein Rückschlagventil realisiert. Dieses Rückschlagventil öffnet in dem Moment, in dem der Druck in dem Expansionsbehälter größer ist als in dem Hydrauliksystem. Das Rückschlagventil ermöglicht also eine Rücksaugung von Hydraulikflüssigkeit bei einer Verringerung des Volumens, wie sie durch eine Abkühlung des Hydrauliksystems erfolgen kann. Das Rückschlagventil hat einen größeren Durchlassquerschnitt als die Drosselbohrung. Auf diese Weise wird berücksichtigt, dass Abkühlvorgänge in einem Kraftfahrzeug in der Praxis schneller erfolgen können als Erwärmungsvorgänge. Die Abkühlung kann beispielsweise mit sehr schneller Rate erfolgen, wenn ein im Betrieb warmes oder heißes Lenkaggregat bei einer plötzlichen Wasserdurchfahrt innerhalb von Sekunden auf die Umgebungstemperatur abgekühlt wird. Diese schnelle Abkühlung würde über die Drosselbohrung nicht kompensiert werden können.

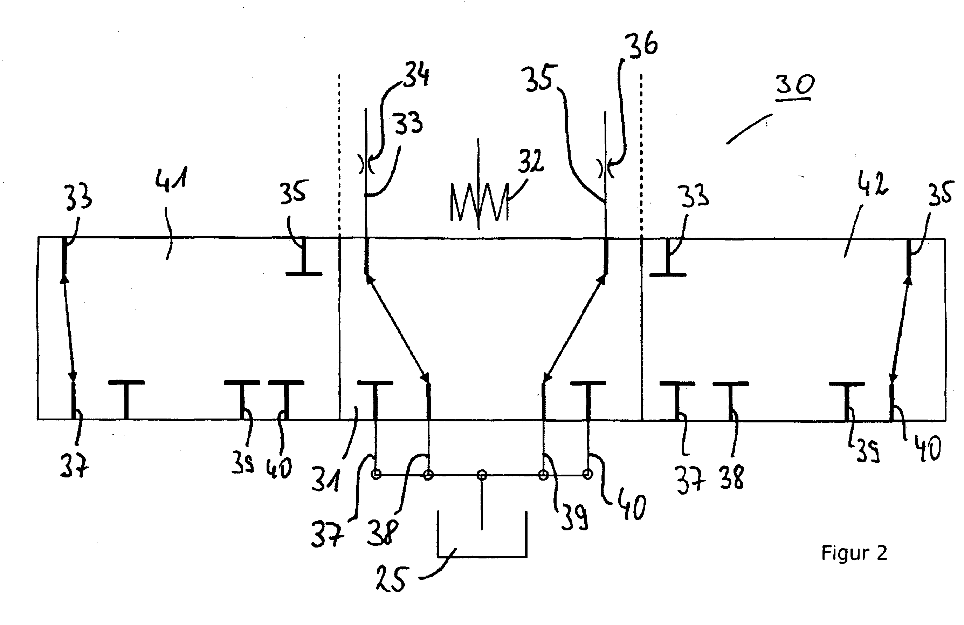

Eine verbesserte Ausführungsform des Druckausgleichs stellt die Figur 2 dar. Hier ist ein Schieberventil 30 schematisch anhand eines Schaltsymbols veranschaulicht. Das Ventil 30 weist einen schematisch dargestellten Schieber 31 auf, der von einer Feder 32 in die Mittelstellung vorgespannt ist. Das Ventil 30 ist mit einem ersten Anschluss 33 über eine Drosselbohrung 34 mit der Hydraulikleitung 12 aus Figur 1 oder einem mit dieser Hydraulikleitung kommunizierenden Arbeitsraum verbunden. Ein zweiter Anschluss 35 des Ventils 30 ist ebenfalls über eine Drosselbohrung 36 mit der Hydraulikleitung 13 oder einem der daran angeschlossenen Arbeitsräume verbunden.

Auf der anderen Seite des Schiebers 31 ist das Ventil 30 mit zwei Anschlüssen 37 und 38 verbunden, die dem Anschluss 33 zugeordnet sind. Weitere Anschlüsse 39 und 40 sind dem Anschluss 35 zugeordnet. Die vier Anschlüsse 37, 38, 39 und 40 kommunizieren mit dem Expansionsbehälter 25 aus Figur 1.

In der in Figur 2 dargestellten Mittelstellung des Ventils 30 sind die Anschlüsse des Ventils so geschaltet, das der Anschluss 33 mit dem Anschluss 38 und darüber mit dem Ausgleichsbehälter 25 verbunden ist. Der Anschluss 35 ist mit dem Anschluss 39 und dieser wiederum mit dem Expansionsbehälter 25 verbunden. Eine Volumenänderung in der Hydraulikleitung 12 und in der Hydraulikleitung 13 führt deshalb zu einer Änderung des Volumens in dem Expansionsbehälter 25.

Wird der Schieber 31 nach rechts bewegt, so wird die mit der Ziffer 41 bezeichnete Schaltstellung eingenommen. Diese Stellung wird dadurch selbsttätig eingenommen, dass der Arbeitsraum 11 und damit die Hydraulikleitung 13 mit Druck beaufschlagt wird. Dieser Druck verlagert den Schieber 31 gegen die Rückstellkraft der Feder 32. Dadurch wird die Verbindung zwischen dem Anschluss 35 und dem Anschluss 39 unterbrochen. Der Anschluss 35 wird vollständig geschlossen. Eine Verbindung mit dem Expansionsbehälter 25 besteht nicht mehr. Auf der anderen Seite wird der Anschluss 33 mit dem Anschluss 37 verbunden. Die Hydraulikleitung 12 bleibt dadurch mit dem Expansionsbehälter 25 verbunden.

Bei einer Bewegung des Lenkrades 1 in die Gegenrichtung wird der Arbeitsraum 10 mit Druck beaufschlagt, ebenso die Hydraulikleitung 12. Der Schieber 31 bewegt sich dadurch in die Schaltstellung 42. In dieser Schaltstellung werden die Anschlüsse 33 und 37 beziehungsweise 38 getrennt. Zwischen der Hydraulikleitung 12 und dem Expansionsbehälter 25 besteht dann keine Verbindung mehr. Der Druckausbau in der Leitung 12 führt dann nicht zu einer Strömung in dem Expansionsbehälter 25 hinein. Auf der anderen Seite ist der Anschluss 35 mit dem Anschluss 40 und darüber mit dem Expansionsbehälter 25 verbunden. Eine Druckminderung in dem System führt auf dieser Seite dann zu einem Ausgleich mit dem Expansionsbehälter 25.

Im Ergebnis wird auf diese Weise zweierlei erreicht, nämlich einmal dass in der Mittelstellung beide Hydraulikleitungen 12 und 13 über den Expansionsbehälter 25 miteinander in Verbindung stehen und eine Volumenänderung in beiden Teilkreisen der Hydraulik ausgeglichen werden kann. Wenn die Lenkung andererseits in die eine oder andere Richtung betätigt wird, wird die mit Druck beaufschlagte Seite des Hydrauliksystem gegenüber dem Expansionsbehälter 25 abgeschnitten, so dass der Druckaufbau in diesem System spontan und ohne Schlupf erfolgen kann. Dies ist für ein direktes Lenkgefühl und eine direkte Umsetzung der Lenkbewegung in eine Verschränkung der Räder 19 vorteilhaft. In diesem Betriebszustand ist die jeweils drucklose Seite mit dem Expansionsbehälter 25 verbunden und kann einen Volumenausgleich vornehmen, also entweder Hydraulikfluid in den Expansionsbehälter 25 abgeben oder Hydraulikfluid aus dem Expansionsbehälter 25 zurück saugen.

Das Ventil 30 kann in der Darstellung der Figur 1 beispielsweise am Ort des Ventils 24 vorgesehen sein, wenn auf das Ventil 24 verzichtet wird. Es ist vollkommen selbsttätig, allein durch den Druck in den Hydraulikleitungen 12 und 13 gesteuert. Eine elektronische Steuerung ist für dieses Ventil nicht erforderlich.

### Bezugszeichenliste

1. Lenkrad
2. Lenkwelle
3. Drehwinkelsensor
4. Drehmomentsensor
5. elektronische Steuerung
6. Ritzel
7. Verzahnung
8. Kolbenstange
9. Hydraulikkolben
10. Arbeitsraum
11. Arbeitsraum
12. Hydraulikleitung
13. Hydraulikleitung
14. Arbeitsraum
15. Arbeitsraum
16. Lenkgetriebe
17. Kolbenstange
18. Spurstangen
19. lenkbare Räder
20. Kugelumlauf
21. Servomotor
22. Zahnriemen
23. Signalleitung
24. 2/2-Wege-Ventil
25. Expansionsbehälter
30. Schieberventil
31. Schieber
32. Feder
33. Anschluss
34. Drosselbohrung
35. Anschluss
36. Drosselbohrung
37. Anschluss
38. Anschluss
39. Anschluss
40. Anschluss
41. Schaltstellung

## Patentansprüche

1. Lenksystem für ein Kraftfahrzeug mit einem Lenkrad (1), einer Lenkwelle (2) und einem hydraulischen Geberaggregat, wobei die Lenkwelle (2) über eine Verzahnung (6, 7) mit dem Geberaggregat in mechanischer Wirkverbindung steht, sowie mit Hydraulikleitungen (12, 13) und einem hydraulischen Nehmeraggregat in einem Lenkgetriebe (16), das zur Verschwenkung lenkbarer Räder (19) mit diesen mechanisch gekoppelt ist, **dadurch gekennzeichnet, dass** die Wirkverbindung zwischen der Lenkwelle (2) und dem hydraulischen Geberaggregat eine Verzahnung mit variabler Übersetzung ist.

2. Lenksystem nach Anspruch 1, **dadurch gekennzeichnet, dass** das hydraulische Geberaggregat ein Kolben/Zylinderaggregat mit einer axial verlagerbaren Kolbenstange (8) ist, wobei die variable Verzahnung als Zahnsegment (7) auf der Kolbenstange (8) ausgebildet ist.

3. Lenksystem nach einem der vorhergehenden Ansprüche, **dadurch gekennzeichnet, dass** die Kolbenstange (8) aus einem Arbeitsraum (10) des hydraulischen Geberaggregats heraus geführt Ist und dass die Verzahnung (7) in dem aus dem Arbeitsraum (10) heraus ragenden Abschnitt der Kolbenstange (8) angeordnet ist.

4. Lenksystem nach einem der vorhergehenden Ansprüche, **dadurch gekennzeichnet, dass** ein Expansionsbehälter (25) vorgesehen ist, der mit wenigstens einer Hydraullkleltung (12, 13) und/oder wenigstens einem hydraulischen Arbeitsraum (10, 11, 14, 15) kommuniziert.

5. Lenksystem nach einem der vorhergehenden Ansprüche, **dadurch gekennzeichnet, dass** eine elektronische Steuerung (5) für die Ansteuerung eines elektrischen Stellmotors (21) vorgesehen ist, der mit dem Lenkgetriebe (16) in Wirkverbindung steht.

## Claims

1. Steering system for a motor vehicle comprising a steering wheel (1), a steering shaft (2) and a hydraulic master unit, the steering shaft (2) being mechanically actively connected to the master unit by a gear tooth system (6, 7), and also comprising hydraulic lines (12, 13) and a hydraulic slave unit in a steering gear (16) which is mechanically coupled to steerable wheels (19) for swivelling said wheels, **characterised in that** the active connection between the steering shaft (2) and the hydraulic master unit is a gear tooth system with a variable transmission ratio.

2. Steering system according to Claim 1, **characterised in that** the hydraulic master unit is a piston/cylinder unit with an axially displaceable piston rod (8), the variable gear tooth system being configured as a tooth segment (7) on the piston rod (8).

3. Steering system according to any one of the preceding claims, **characterised in that** the piston rod (8) is guided out of a working chamber (10) of the hydraulic master unit and **in that** the gear tooth system (7) is arranged in the portion of the piston rod (8) projecting out of the working chamber (10).

4. Steering system according to any one of the preceding claims, **characterised in that** an expansion container (25) is provided which communicates with at least one hydraulic line (12, 13) and/or with at least one hydraulic working chamber (10, 11, 14, 15).

5. Steering system according to any one of the preceding claims, **characterised in that** an electronic control means (5) is provided for controlling an electric servomotor (21) which is actively connected to the steering gear (16).

## Revendications

1. Système de direction pour un véhicule automobile comprenant un volant (1), un arbre de direction (2) et un ensemble émetteur hydraulique, l'arbre de direction (2) possédant une liaison d'effet mécanique avec l'ensemble émetteur et des conduites hydrauliques (12, 13), ainsi qu'un ensemble récepteur hydraulique via une denture (6, 7) dans un mécanisme de direction (16), qui est couplé mécaniquement avec les roues dirigeables (19) pour faire pivoter celles-ci, **caractérisé par le fait que** la liaison active entre l'arbre de direction (2) et l'ensemble émetteur hydraulique soit une denture dotée d'un rapport de transmission variable.

2. Selon la revendication 1, le système de direction est **caractérisé par le fait que** l'ensemble émetteur hydraulique soit un ensemble piston/cylindre avec une tige de piston (8) déplaçable sur un plan axial, la denture variable étant formée en tant que segment denté (7) sur la tige de piston (8).

3. Selon l'une des revendications précédentes, le système de direction est **caractérisé par le fait que** la tige de piston (8) soit acheminée à l'extérieur d'une chambre de travail (10) de l'ensemble émetteur hydraulique et que la denture (7) soit disposée sur la section de la tige du piston (8) sortant de la chambre de travail (10).

4. Selon l'une des revendications précédentes, le système de direction est **caractérisé par le fait qu'**un réservoir d'expansion (25) communiquant avec au moins une conduite hydraulique (12, 13) et/ou au moins une chambre de travail hydraulique (10, 11, 14, 15) soit prévu.

5. Selon l'une des revendications précédentes, le système de direction est **caractérisé par le fait qu'**une commande électronique (5) soit prévue pour amorcer un servomoteur électrique (21), qui possède une liaison d'effet avec le mécanisme de direction (16).
